# EUROPEAN PATENT SPECIFICATION

(11) **EP 2 918 666 B1**
(45) Date of publication and mention of the grant of the patent: **02.05.2018**
(21) Application number: 13852922.7
(22) Date of filing: 08.11.2013
(51) Int. Cl.: C12G 1/022, C12G 1/032

(54) **METHOD FOR FERMENTING MUST, AND FERMENTATION VAT**
VERFAHREN ZUR FERMENTATION VON MOST UND FERMENTATIONSTANK
PROCESSUS DE FERMENTATION DE MOÛT ET CUVE DE FERMENTATION

(30) Priority: 08.11.2012 ES 201231708; 06.11.2013 ES 201331624
(43) Date of publication of application: 16.09.2015
(73) Proprietor: Maquinas y Herramientas la Rioja, S.L., 26006 Logrono, La Rioja (ES)
(72) Inventor: NAJARRO SANTAMARIA, Juan, 26006 Logroño (La Rioja) (ES)
(74) Representative: Carpintero Lopez, Francisco
(86) International application number: PCT/ES2013/070773
(87) International publication number: WO 2014/072562

(56) References cited:
- EP-A1- 1 329 254
- EP-A1- 2 060 623
- WO-A1-2010/105675
- WO-A1-2010/105676
- WO-A1-2011/148227
- WO-A1-2011/161495
- WO-A1-2012/056433
- ES-A1- 2 226 538
- ES-T3- 2 241 985
- US-A1- 2011 268 856

## Description

### Object of the Invention

The present invention relates to the viticulture industry, and more specifically to methods of treatment, fermentation and vinification of the must.

The primary object of the present invention is a method for fermenting must, as well as a fermentation vat, which fundamentally stand out because they allow efficient breaking and movement of the "cap" formed in the top part of the vat, thereby maximizing the transfer of the content of the skins and accordingly increasing the quality of the final wine produced.

### Background of the Invention

Fermentation is known today as the method whereby the sugars contained in must are converted into ethyl alcohol, ultimately producing wine. The presence of yeasts, which consist of microorganisms present in the fruit, is necessary to carry out said method for fermenting. Therefore, yeasts of the genus *Saccharomyces,* which are facultative anaerobic yeasts, i.e., they are able to perform said fermentation in the absence of oxygen, are generally used in fermentation. Nevertheless, oxygen is a key parameter in the method for fermenting because yeasts need it during their growth phase.

Also, another important factor in fermentation is pH due to its importance in controlling bacterial contamination, as well as its effect on the growth of yeasts, the rate of fermentation and the formation of alcohol. It is currently known that the lower the pH of the medium, the lower the risk of infection, but when working with very low pH levels, fermentation is very slow because the yeast does not develop suitably. According to many studies, the pH that is most favorable for the growth of yeasts is between 4.4 and 5.0, 4.5 being the most optimal value.

In addition to ethanol, another product resulting from fermentation is carbon dioxide or carbonic anhydride (CO₂) in the gaseous state, which causes the characteristic bubbling, boiling and aroma of a vat with fermenting must. Said boiling makes the solid parts of the grapes (skins) rise to the surface of the vat, forming a floating layer in the top part thereof, generally referred to as a "cap". This cap yields to the must a large amount of substances contained in the skins (primarily tannins, anthocyanins and flavonoids), as a result of which the wine acquires its characteristic reddish color, its aroma, etc. So for extracting said substances existing in the skins, and mixing them with the must that is being fermented, it is necessary to break, soak, move, and even, if possible, submerge said cap, preventing it from solidifying.

Today, the most widely used method for breaking and moving the cap formed in the top part of fermentation vats is known as "pumping over", which consists of taking must from the lower part of the vat and feeding it to the top part, and then spraying and discharging it directly on the cap (ES2190301). This operation is performed three or four times a day, the primary drawback being the high economic cost it entails due to the number of necessary pumps, pipes and valves, not to mention that said pumping over method changes the properties of the wine, causing the partial loss of its aroma. Furthermore, said method requires continuous control and follow-up by qualified staff, which again increases costs. Finally, it must be pointed out that this system does not completely "break" the cap.

On the other hand, there are other systems that break or submerge the cap by means of mechanical elements, such as cylinders, blades, pneumatic pistons, worm screws, etc., all of them being complex as regards installation, mounting and use, making the installation substantially more expensive.

Systems based on an overhead crane responsible for lifting a small reservoir (OVI, from the Spanish expression "objeto volador identificado" (identified flying object)) to soak the cap, and thereby dispense with pumps and pipes, are also known in the state of the art. The main objective of these systems is to obtain wine having a higher quality and longer lifespan, achieving better qualities in the aging of the wine. Notwithstanding the foregoing, these installations have mounting, maintenance and use costs far exceeding those of a winery provided with a conventional pumping over system.

Finally, the translation of European patent ES2181035 T3 is known, which discloses a fermenter requiring the installation of at least one diaphragm having a concave configuration arranged inside the fermentation vat, and the system of which for moving the "cap" basically consists of accumulating carbon dioxide bubbles generated during fermentation, retaining them by means of said diaphragms until the bubbles have reached a larger dimension. Therefore, through the upward movement of the larger-sized bubbles, once said bubbles have escaped and are released from the diaphragms, remixing of the cap floating on the must is achieved.

International patent application WO2012/056433 A1 relates to a control method for a fermenter for a vegetable product in crushed form, and to a fermenter that carries it out. On the other hand, European patent application EP1329254 A1 describes a device and process for mixing of liquid, viscous and/or pourable media.

Therefore, it has been detected that current fermentation systems have several drawbacks, among which the following stand out:
- they are very complex from a structural viewpoint as they require the construction and installation of a number of parts and components in the fermentation vat;
- they perform the must soaking and mixing phases by means of pouring and pumping liquid;
- they do not allow automating the method for fermenting, depending directly on human operators and affecting the quality of the final wine produced;
- the compressors used have greases and oils, which are contaminating elements for the method for fermenting;
- they do not allow oxygenating or aerating the must to be fermented, which can cause death of the yeasts, and therefore premature stopping of the method for fermenting;
- they do not allow controlling the pH of the must;
- fouling accumulates in reservoirs, with the enormous negative effect this entails in the entire method for fermenting and the subsequent loss of quality of the final wine produced;
- they make it difficult to perform cleaning and maintenance tasks on the inner part of the fermentation vat;
- they involve considerable manual labor and power consumption costs, significantly increasing total installation costs.

### Description of the Invention

The drawbacks mentioned above are solved by means of the present invention by providing a method for fermenting must, and a fermentation vat, which allow obtaining the efficient breaking and movement of the layer of skins, or "cap", created spontaneously in the top part of the must during fermentation, thereby maximizing the transfer of the content of the skins to the wine, preserving the characteristic aroma and color of the wine, and accordingly increasing the final quality thereof. All this is done with minimal power consumption and a substantial reduction of manual labor, where the entire method for fermenting is controlled through an automatism.

The method for fermenting and fermentation vat herein described stand out because, in addition to their simple execution, structural simplicity and low cost, they allow oxygenation or aeration of the must, which allows assuring that the fermentation performed by the yeasts will not be stopped, said fermentation being performed quickly and completely, thereby favoring the possibility of using one and the same fermentation vat several times in the same harvest.

More particularly, the method for fermenting must of the present invention is of the type performed in a fermentation vat for producing wine, where said method for fermenting comprises a phase of breaking and remixing a floating layer of skins formed on the surface of the must while it is being fermented.

Said phase of breaking comprises the following steps: a) suctioning CO₂ gas generated during fermentation of the must, said suctioning being performed in the fermentation vat above the layer of skins; b) mixing said suctioned CO₂ gas with outside air to favor oxygenation of the wine; and c) introducing the mixture of CO₂ gas and outside air into the fermentation vat, said mixture being expelled into the must below the layer of skins, generating bubbles formed by CO₂ gas and air which, in their upward movement towards the surface, cause the recirculation of the liquid, causing the breaking and movement of said layer of skins.

It should be pointed out that the suctioning of CO₂ gas of step a) is strategically performed in the position indicated above, in the fermentation vat above the layer of skins, because since the density of CO₂ gas is greater than the density of air, the air existing inside the fermentation vat therefore experiences a spontaneous outward displacement, exiting through the top opening of the vat, and the space existing between the layer of skins and said top opening of the fermentation vat being filled with CO₂ gas, favoring the suctioning thereof. Use of a lid or cover on the fermentation vat is therefore dispensed with, allowing the enologist or qualified person in question to control at all times the state of fermentation of the must.

Furthermore, said suctioning of CO₂ gas of step a) is performed by means of at least one suction filter which collects and filters CO₂ gas, separating it from the remaining gases, for more optimal execution and development of the method for fermenting herein described.

It has also been envisaged that the outside air intended for being mixed in step b) is previously regulated through at least one aeration valve, thereby achieving a greater or lesser inlet of air, which allows increasing or reducing oxygenation of the wine. At this point it should be indicated that it has been envisaged that said regulation of air can be done manually by qualified staff or automatically through a sensor preferably located inside the fermentation vat and adapted for detecting the amount of oxygen existing in the must, said sensor being connected to the aeration valve.

In turn, step b) is preferably performed by means of a compressor that mixes and compresses CO₂ gas and outside air. It should be pointed out at this point that oxygenation of the must allows controlling the pH level of the must at optimal values, preventing it from being very low, which would affect the rate of fermentation performed by the yeasts, and also preventing said pH from being very high, which could cause the presence of bacteria in the wine. It should furthermore be borne in mind that pH is likewise related to the taste of the wine, so the method for fermenting herein described likewise achieves optimization of this parameter. Finally, it must be indicated that said oxygenation also allows controlling the oxidation-reduction potential (redox potential) of wine, which is extremely important in maturation of the final wine produced.

With respect to step c), said step is preferably performed by means of at least one injection conduit which is introduced inside the fermentation vat, where the mixture of CO₂ gas and air is expelled through at least one diffuser nozzle connected to the injection conduit. Said diffuser nozzle is preferably a rotary nozzle for greater homogenization, distribution and uniformity of CO₂ and air bubbles throughout the must contained in the fermentation vat, it having nevertheless been envisaged for said diffuser nozzle to have multiple configurations. In turn, the injection conduit is preferably introduced inside the fermentation vat through the actual top opening of the vat.

It should be pointed out that the method for fermenting of the present invention is of particular interest in "tumultuous" fermentation, which is the most active phase of fermentation. Therefore, the down-top displacement of the CO₂ gas and air bubbles causes continuous and constant movement of the layer of skins, which allows homogenously mixing their content with the must that is being fermented. On the other hand, the method for fermenting herein described is also of interest for "malo-lactic" fermentation, after the aforementioned tumultuous fermentation, and where malic acid is converted into lactic acid, thereby reducing the pH level of the wine and achieving more degrees of color.

Furthermore, it should be indicated as an additional advantage that by means of the method for fermenting of the present invention it is not necessary to perform the phase of "rack-and-return" ("delestaje" in Spanish from the French term "delestage") because the skins precipitate to the bottom of the fermentation vat in a natural manner, thereby reducing total costs of the method for fermenting. It should be borne in mind that said "rack-and-return" consists of taking the wine out of the fermentation vat and introducing it in another reservoir, then leaving the solids to precipitate to the bottom of the fermentation vat, to subsequently again add the wine to the skins deposited at the bottom of the vat.

According to another object of the invention, there is described below a fermentation vat, which comprises a reservoir intended for housing the must; at least one suction filter for suctioning CO₂ gas; wherein said suction filter is strategically located inside the fermentation vat in an intermediate position between a layer of skins intended for being created on the surface of the must and the top opening of said fermentation vat; at least one aeration valve that allows regulating the amount of outside air to be introduced into the fermentation vat; a compressor for mixing and compressing the suctioned CO₂ gas through the suction filter and the outside air coming from the aeration valve; at least one injection conduit connected to the compressor that allows introducing the mixture of CO₂ gas and outside air inside the fermentation vat; and at least one diffuser nozzle connected to the injection conduit and provided with outlet jets for expelling said mixture of CO₂ gas and outside air.

More specifically, the compressor in turn comprises at least two centrifugal pumps, where each of them comprises a leak-tight inner chamber with its corresponding inlet and outlet for circulation of the mixture of CO₂ gas and outside air coming from the suction filter and the aeration valve, respectively; and a manifold connecting the outlet of the first centrifugal pump with the inlet of the second centrifugal pump for serial flow and sequential compression of the mixture through said centrifugal pumps.

Therefore, the centrifugal pumps are connected to one another through the manifold, such that the mixture of CO₂ gas and outside air compressed by the first centrifugal pump is then suctioned and compressed by the second centrifugal pump for the final propelling thereof into the fermentation vat through the injection conduit. Optimal pressure of the mixture of CO₂ gas and outside air is thereby achieved for the propelling thereof through the jets of the diffuser nozzle, said pressure being a key parameter for being able to move and mix all the must contained inside the fermentation vat, and therefore improving the quality of the final wine produced.

Said centrifugal pumps preferably comprise an internal electric motor, connected to the power grid for the electric power supply thereof, said motors comprising their corresponding rotation shafts. In turn, the inner chambers comprise at least one inner impeller fixed integrally to the rotation shaft of the electric motor, so activation of the motor causes rotation of the rotation shaft, and accordingly integral rotation of the impellers that allow compressing the mixture of CO₂ gas and outside air circulating through same.

Furthermore, another important aspect is based on the fact that the fermentation vat additionally comprises a programmable logic controller, preferably with a touch screen, that allows enologists or winemakers to perform complete and thorough control and follow-up of the different phases of the method for fermenting. More specifically, said logic controller allows adjusting and programming the soaking and mixing times, the soaking (cap wetting) time always being less than the mixing (cap breaking) time. It has even been envisaged for said programmable logic controller to be configured to allow remote control of several fermentation vats with different volumetric capacities, thereby providing a versatile character that can be adapted to each winery or situation.

### Description of the Drawings

To complement the description being made and for the purpose of helping to better understand the features of the invention according to a preferred practical embodiment thereof, a set of drawings is attached as an integral part of said description in which the following has been depicted with an illustrative and nonlimiting character:
Figure 1 shows a schematic view of the must fermentation vat object of invention.
Figure 2 shows a detail view of a diffuser nozzle according to another preferred embodiment.
Figure 3 shows a plan view of the diffuser nozzle of Figure 2 according to axis A-A'.
Figure 4 shows a schematic view of the internal components of the compressor shown in Figure 1.

### Preferred Embodiment of the Invention

A preferred embodiment is described below in reference to the aforementioned drawings, without this limiting or reducing the scope of protection of the present invention.

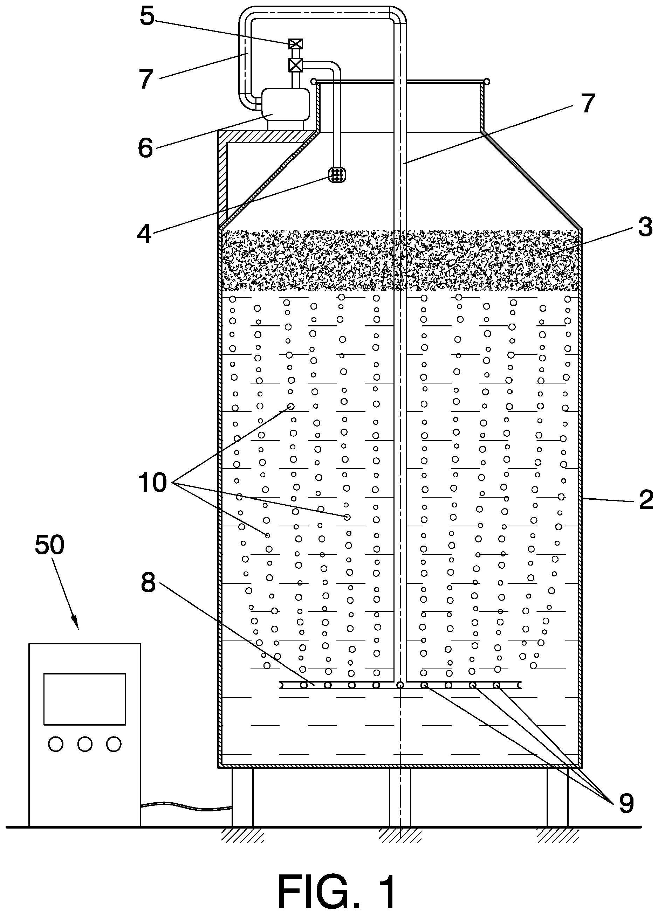

Figure 1 shows a must fermentation vat (1), which comprises:
- at least one suction filter (4) for suctioning CO₂ gas, said suction filter (4) being located in the fermentation vat (1) in an intermediate position between a layer (3) of skins intended for being created on the surface of the must and the top opening of said fermentation vat (1),
- at least one aeration valve (5) that allows regulating the amount of outside air to be introduced into the fermentation vat (1),
- a compressor (6) for mixing and propelling the CO₂ gas suctioned through the suction filter (4) and the outside air coming from the aeration valve (5),
- at least one injection conduit (7) that is connected to the compressor (6) and allows introducing the mixture of CO₂ gas and air inside the fermentation vat (1),
- at least one diffuser nozzle (8), connected to the injection conduit (7), and provided with outlet jets (9) for expelling, in the form of bubbles (10), the mixture of CO₂ gas and air inside the fermentation vat (1); and
- a programmable logic controller (50) PLC with a touch screen that allows controlling the different phases of the method for fermenting, and specifically the programming of the operating times of each of the soaking and mixing phases, as well as the stop and break times between said phases, preventing human errors and maximizing efficiency, yield and therefore qualities of the final wine produced.

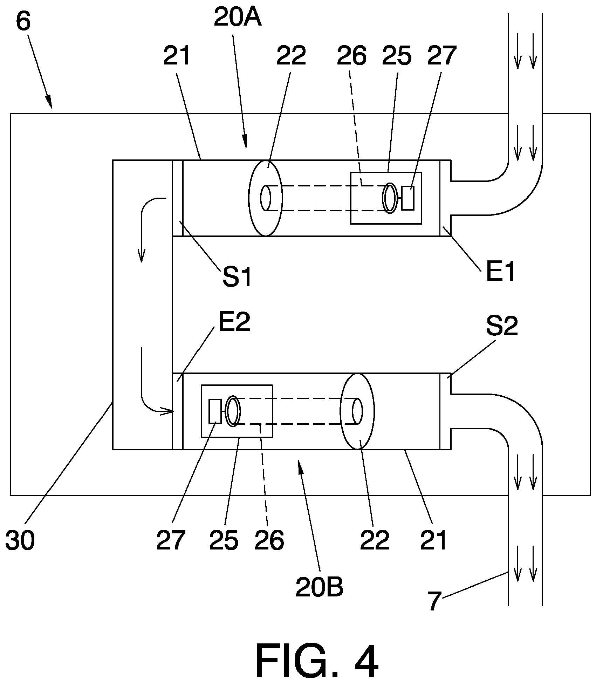

On the other hand, Figure 4 shows that the compressor (6) of the present embodiment basically consists of two centrifugal pumps (20A, 20B), where each of them provides a rotational speed of 22,500 rpm and comprises a leak-tight inner chamber (21) with its corresponding inlet (E1, E2) and outlet (S1, S2) for circulation of the mixture of CO₂ gas and outside air coming from the suction filter (4) and the aeration valve (5), respectively. Furthermore, the compressor (6) comprises a manifold (30) connecting the outlet (S1) of the first centrifugal pump (20A) with the inlet (E2) of the second centrifugal pump (20B) for serial flow of said mixture of CO₂ gas and outside air.

Therefore, although Figure 4 shows that the centrifugal pumps (20A, 20B) are physically arranged in parallel in the compressor (6), for greater robustness and smaller sizing of the compressor (6), the flow of the mixture of CO₂ gas and outside air through them is a serial flow.

Therefore, in an operating state, the first centrifugal pump (20A) initially suctions and compresses the mixture of CO₂ gas and outside air, producing said mixture at its outlet (S1) at a certain pressure P1. This mixture of CO₂ gas and outside air is redirected through the manifold (30) towards the inlet (E2) of the second centrifugal pump (20B), which suctions and compresses the mixture to pressure P2, where P2 is always greater than P1. Finally, the mixture of CO₂ gas and outside air is propelled at outlet pressure P2 from the second centrifugal pump (20B) inside the fermentation vat (1) through the injection conduit (7), thereby achieving complete and efficient movement of all the must contained in the reservoir (2) of the vat, increasing the transfer between the layer (3) of skins of the cap and the must, and hence maximizing quality of the wine.

By means of this special serial arrangement of the centrifugal pumps (20A, 20B) pressure of the mixture of CO₂ gas and outside air at the outlet of the compressor (6) is substantially increased, obtaining values of 0.5 bar of pressure with the use of two pumps (20A, 20B), which allows suitably propelling and injecting said mixture with a flow rate of 3,500 l/min in the must housed in the reservoir (2) of the vat. This flow rate allows producing a movement of the must exceeding 10,000 l/min, which makes it suitable for large capacity reservoirs (of up to about 175,000 liters) having a height of up to 11 meters, and where it has been demonstrated that to produce optimal soaking and mixing of the content of the must and the "cap", injecting the mixture of CO₂ gas and outside air at about half the height is sufficient, injecting the mixture at a depth of 5 meters in this case. Nevertheless, it has been envisaged that even 0.75 bar of pressure can be achieved by means of using three centrifugal pumps, such as those herein described.

More particularly, the schematic view of Figure 4 shows that the centrifugal pumps (20A, 20B) comprise an internal electric motor (25) with its corresponding rotation shaft (26), and where the inner chambers (21) in turn comprise at least one impeller (22) fixed integrally to the rotation shaft (26) of the electric motor (25) for compressing the mixture of CO₂ gas and outside air. Therefore, the rotational movement of the rotation shaft (26) of the electric motor (25) causes the integral rotation of the impellers (22), which are the elements responsible for performing compression, by centrifugal force, of the mixture of CO₂ gas and outside air circulating through same.

According to the present embodiment, both the rotation shafts (26) of the electric motors (25) and the impellers (22) are made of stainless steel, being furthermore impregnated with epoxy resin for their protection against corrosion and electrical insulation, making them suitable for their direct contact with the mixture of CO₂ gas and outside air, as well as for obtaining the relevant health authorizations and homologations, preventing use of contaminating oils or greases.

It has more preferably been envisaged for the electric motors (25) to be able to comprise thermal protection means (27) that allow interrupting their operation in the event of overheating and which preferably comprise a thermal relay. It has also been envisaged for the pumps herein described to have a protective fireproof and vibration-absorbing casing, preferably being made of polyvinyl chloride (PVC).

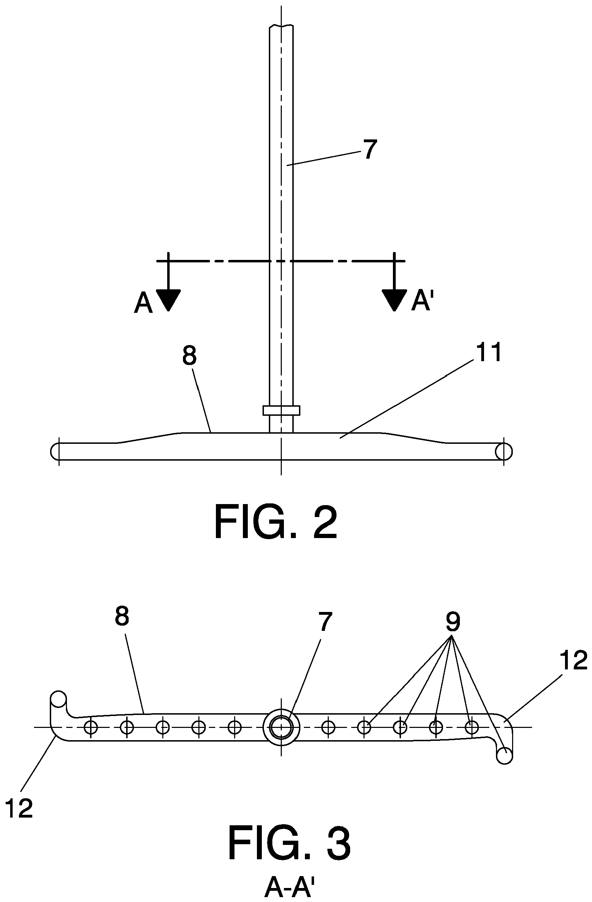

According to a second preferred embodiment shown in Figures 2 and 3, the diffuser nozzle (8) of the fermentation vat (1) is a rotary nozzle. Said rotary diffuser nozzle (8) even more preferably comprises an elongated discharge body having bends (12) at its distal ends and a central stretch (11) having a larger section than said bends (12), which in addition to providing the assembly with robustness, favors uniform distribution of the bubbles (10) intended for being expelled through the outlet jets (9) throughout the entire fermentation vat (1). This accordingly causes a more complete and homogenous movement of the entire layer (3) of skins.

Therefore, by means of the method for fermenting and fermentation vat herein described homogenous and continuous movement of the layer (3) of skins is produced for a rapid and efficient fermentation, the primary advantages of which are:
- extraction of the content from the layer of skins is maximized,
- oxygenation or aeration of the must to be fermented is allowed,
- pH level and redox potential are controlled,
- use of hydraulic pumps is prevented, which allows reducing economic costs,
- they are useful and can be applied both in tumultuous fermentation and in malo-lactic fermentation,
- the fermentation vat is self-sufficient as regards CO₂ gas, not requiring additional reservoirs storing the gas,
- the phase of rack-and-return does not need to be performed,
- micro-oxygenation does not need to be performed,
- it is ecological, preventing use of external CO₂ for mixing the must,
- it is economical, reducing power consumption by more than 50%,
- it is efficient, allowing reducing the pumping overwork hours by at least half.

## Claims

1. Method for fermenting must, performed in a fermentation vat (1) for producing wine, where said method for fermenting comprises a phase of breaking and remixing a floating layer (3) of skins formed on the surface of the must to be fermented, said phase of breaking being **characterized by** comprising the following steps:
a) suctioning CO₂ gas generated during fermentation of the must, said suctioning being performed in the fermentation vat (1) above the layer (3) of skins by means of at least one suction filter (4) which collects and filters CO₂ gas, wherein said suction filter (4) is strategically located inside the fermentation vat (1), in an intermediate position between a layer (3) of skins intended for being created on the surface of the must and the top opening of said fermentation vat (1),
b) mixing the suctioned CO₂ gas with outside air to favor oxygenation of the wine, and
c) introducing the mixture of CO₂ gas and outside air into the fermentation vat (1), said mixture being expelled into the must below the layer (3) of skins, generating bubbles (10) formed by CO₂ gas and air which, in their upward movement towards the surface, cause the breaking and movement of said layer (3) of skins;
the method being performed in a single fermentation vat (1), which is self-sufficient as regards CO₂, not requiring additional reservoirs storing the gas.

2. Method for fermenting must according to claim 1, **characterized in that** the outside air mixed in step b) is previously regulated through at least one aeration valve (5).

3. Method for fermenting must according to claim 2, **characterized in that** the regulation of outside air is performed automatically through a sensor, located inside the fermentation vat (1), and adapted for detecting the amount of oxygen existing in the must and connected to the aeration valve (5).

4. Method for fermenting must according to claim 1, **characterized in that** step b) is performed in a compressor (6) that mixes and compresses the CO₂ gas and outside air.

5. Method for fermenting must according to claim 1, **characterized in that** step c) is performed by means of at least one injection conduit (7) which is introduced inside the fermentation vat (1), where the mixture of CO₂ gas and air is expelled through at least one diffuser nozzle (8) connected to said injection conduit (7).

6. Method for fermenting must according to claim 5, **characterized in that** the injection conduit (7) is introduced inside the fermentation vat (1) through the actual top opening of the vat (1).

7. Must fermentation vat (1), for producing wine according to the method for fermenting described in any one of claims 1 to 6, and comprising a reservoir (2) intended for housing the must, being said fermentation vat (1) **characterized by** comprising:
- at least one suction filter (4) for suctioning CO₂ gas, said suction filter (4) being strategically located inside the fermentation vat (1), in an intermediate position between a layer (3) of skins intended for being created on the surface of the must and the top opening of said fermentation vat (1),
- at least one aeration valve (5) that allows regulating the amount of outside air to be introduced into the fermentation vat (1),
- a compressor (6) for mixing the CO₂ gas suctioned through the suction filter (4) and the outside air coming from the aeration valve (5),
- at least one injection conduit (7) that is connected to the compressor (6) and allows introducing the mixture of CO₂ gas and air inside the fermentation vat (1), and
- at least one diffuser nozzle (8), connected to the injection conduit (7), and provided with outlet jets (9) for expelling the mixture of CO₂ gas and air inside the fermentation vat (1).

8. Must fermentation vat (1) according to claim 7, **characterized in that** the compressor (6) comprises:
- at least two centrifugal pumps (20A, 20B), where each of them comprises a leak-tight inner chamber (21) with its corresponding inlet (E1, E2) and outlet (S1, S2) for circulation of the mixture of CO₂ gas and outside air coming from the suction filter (4) and the aeration valve (5), respectively, and
- a manifold (30) connecting the outlet (S1) of the first centrifugal pump (20A) with the inlet (E2) of the second centrifugal pump (20B) for serial flow and sequential compression of the mixture through said centrifugal pumps (20A, 20B).

9. Must fermentation vat (1) according to claim 8, **characterized in that** the fermentation vat (1) additionally comprises a programmable logic controller (50) for controlling and programming the different phases of the method for fermenting.

10. Must fermentation vat (1) according to claim 8, **characterized in that** the centrifugal pumps (20A, 20B) comprise a internal electric motor (25) with its corresponding rotation shaft (26), and **in that** the inner chambers (21) comprise at least one inner impeller (22) fixed integrally to the rotation shaft (26) of the electric motor (25) for compressing the mixture of CO₂ gas and outside air.

11. Must fermentation vat (1) according to claim 10, **characterized in that** the rotation shafts (26) of the electric motors (25) and impellers (22) are made of stainless steel and impregnated with epoxy resin.

12. Must fermentation vat (1) according to claim 10, **characterized in that** the electric motors (25) of the centrifugal pumps (20A, 20B) comprise thermal protection means (27) that interrupt operation in the event of overheating.

13. Must fermentation vat (1) according to claim 7, **characterized in that** the diffuser nozzle (8) is a rotary nozzle.

14. Must fermentation vat (1) according to claim 13, **characterized in that** the rotary diffuser nozzle (8) comprises a elongated discharge body having bends (12) at its distal ends and a central stretch (11) having a larger section than said bends (12).

15. Must fermentation vat (1) according to any of preceding claims 7-14, **characterized in that** the fermentation vat (1) is dispensed with a lid or cover; and wherein the injection conduit is located inside the fermentation vat (1) through the actual top opening of the vat (1).

## Patentansprüche

1. Verfahren zum Fermentieren von Most, das in einem Fermentationstank (1) zur Herstellung von Wein durchgeführt wird, wobei das Fermentationsverfahren eine Phase des Aufbrechens und Neumischens einer schwimmenden Schicht (3) von Häuten aufweist, die auf der Oberfläche des Mosts, der fermentiert werden soll ausgebildet wird, wobei die Phase des Aufbrechens **dadurch gekennzeichnet ist, dass** sie die folgende Schritte aufweist:
a) Ansaugen von CO₂-Gas, das während der Fermentation des Mosts erzeugt wird, wobei das Ansaugen in dem Fermentationstank (1) mit Hilfe wenigstens eines Ansaugfilters (4), das CO₂-Gas sammelt und filtert, über der Schicht (3) von Häuten durchgeführt wird, wobei das Ansaugfilter (4) strategisch innerhalb des Fermentationstanks (1) in einer Zwischenposition zwischen einer Schicht (3) von Häuten, die auf der Oberfläche des Mosts erzeugt werden soll, und der oberen Öffnung des Fermentationstanks (1) angeordnet ist,
b) Mischen des angesaugten CO₂-Gases mit Außenluft, um die Sauerstoffanreicherung des Weins zu begünstigen, und
c) Einleiten der Mischung des CO₂-Gases und Außenluft in den Fermentationstank (1), wobei die Mischung in den Most unterhalb der Schicht (3) von Häuten ausgestoßen wird, wobei durch das CO₂-Gas und Luft ausgebildete Blasen (10) erzeugt werden, die in ihrer Aufwärtsbewegung in Richtung der Oberfläche das Aufbrechen und die Bewegung der Schicht (3) von Häuten bewirken;
wobei das Verfahren in einem einzigen Fermentationstank (1) durchgeführt wird, der was CO₂ anbetrifft, autark ist und keine zusätzlichen Vorratsbehälter, die das Gas lagern, benötigt.

2. Verfahren zum Fermentieren von Most nach Anspruch 1, **dadurch gekennzeichnet, dass** die in Schritt b) vermischte Außenluft vorher durch wenigstens ein Belüftungsventil (5) reguliert wird.

3. Verfahren zum Fermentieren von Most nach Anspruch 2, **dadurch gekennzeichnet, dass** die Regulierung von Außenluft automatisch durch einen Sensor durchgeführt wird, der innerhalb des Fermentationstanks (1) angeordnet ist und geeignet ist, die Sauerstoffmenge, die in dem Most vorhanden ist, zu erfassen, und der mit dem Belüftungsventil (5) verbunden ist.

4. Verfahren zum Fermentieren von Most nach Anspruch 1, **dadurch gekennzeichnet, dass** der Schritt b) in einem Kompressor (6) durchgeführt wird, der das CO₂-Gas und Außenluft mischt und komprimiert.

5. Verfahren zum Fermentieren von Most nach Anspruch 1, **dadurch gekennzeichnet, dass** der Schritt c) mit Hilfe wenigstens eines Einspritzkanals (7) durchgeführt wird, der in den Fermentationstank (1) eingeführt ist, wobei die Mischung aus CO₂-Gas und Luft durch wenigstens eine Diffusorspritze (8) ausgestoßen wird, die mit dem Einspritzkanal (7) verbunden ist.

6. Verfahren zum Fermentieren von Most nach Anspruch 5, **dadurch gekennzeichnet, dass** der Einspritzkanal (7) durch die tatsächliche obere Öffnung des Tanks (1) ins Innere des Fermentationstanks (1) eingeführt ist.

7. Mostfermentationstank (1) zur Herstellung von Wein nach dem Verfahren zum Fermentieren, das in jedem der Ansprüche 1 bis 6 beschrieben ist, der einen Vorratsbehälter (2), der dafür gedacht ist, den Most aufzunehmen, umfasst, wobei der Fermentationstank (1) **dadurch gekennzeichnet ist, dass** er aufweist:
- wenigstens ein Ansaugilter (4) zum Ansaugen von CO₂-Gas, wobei das Ansaugfilter (4) strategisch innerhalb des Fermentationstanks (1) in einer Zwischenposition zwischen einer Schicht (3) von Häuten, die auf der Oberfläche des Mosts erzeugt werden soll, und der oberen Öffnung des Fermentationstanks (1) angeordnet ist,
- wenigstens ein Belüftungsventil (5), das die Regulierung der Menge der Außenluft, die in den Fermentationstank (1) eingeleitet werden soll, zulässt,
- einen Kompressor (6) zum Mischen des durch das Ansaugfilter (4) angesaugten CO₂-Gases und der Außenluft, die von dem Belüftungsventil (5) kommt,
- wenigstens einen Einspritzkanal (7), der mit dem Kompressor (6) verbunden ist, und das Einleiten der Mischung des CO₂-Gases und Luft im Inneren des Fermentationstanks (1) zulässt, und
- wenigstens eine Diffusorspritze (8), die mit dem Einspritzkanal (7) verbunden ist und mit Auslassdüsen (9) versehen ist, um die Mischung von CO₂-Gas und Luft im Inneren des Fermentationstanks (1) auszustoßen.

8. Mostfermentationstank (1) nach Anspruch 7, **dadurch gekennzeichnet, dass** der Kompressor (6) aufweist:
- wenigstens zwei Zentrifugalpumpen (20A, 20B), wobei jede von ihnen eine leckdichte Innenkammer (21) aufweist, wobei ihr entsprechender Einlass (E, E2) und Auslass (S1, S2) für die Zirkulation der Mischung von CO₂-Gas und Außenluft jeweils von dem Ansaugfilter (4) und dem Belüftungsventil (5) kommen, und
- ein Verteilerrohr (30), das den Auslass (S1) der ersten Zentrifugalpumpe (20A) für den seriellen Fluss und die sequentielle Kompression der Mischung durch die Zentrifugalpumpen (20A, 20B) mit dem Einlass (E2) der zweiten Zentrifugalpumpe (20B) verbindet.

9. Mostfermentationstank (1) nach Anspruch 8, **dadurch gekennzeichnet, dass** der Fermentationstank (1) zusätzlich eine programmierbare Logiksteuerung (50) zum Steuern und Programmieren der verschiedenen Phasen des Verfahrens zum Fermentieren aufweist.

10. Mostfermentationstank (1) nach Anspruch 8, **dadurch gekennzeichnet, dass** die Zentrifugalpumpen (20A, 20B) einen inneren Elektromotor (25) mit seiner entsprechenden Drehwelle (26) aufweisen, und dass die Innenkammern (21) wenigstens ein inneres Wirbelrad (22) aufweisen, das integral an der Drehwelle (26) des Elektromotors (25) zum Komprimieren der Mischung aus CO₂-Gas und Außenluft befestigt ist.

11. Mostfermentationstank (1) nach Anspruch 10, **dadurch gekennzeichnet, dass** die Drehwellen (26) der Elektromotoren (25) und Wirbelräder (22) aus nichtrostendem Stahl hergestellt und mit Epoxidharz imprägniert sind.

12. Mostfermentationstank (1) nach Anspruch 10, **dadurch gekennzeichnet, dass** die Elektromotoren (25) der Zentrifugalpumpen (20A, 20B) thermische Schutzeinrichtungen (27) aufweisen, die den Betrieb im Fall der Überhitzung unterbrechen.

13. Mostfermentationstank (1) nach Anspruch 7, **dadurch gekennzeichnet, dass** die Diffusorspritze (8) eine Drehspritze ist.

14. Mostfermentationstank (1) nach Anspruch 13, **dadurch gekennzeichnet, dass** die Drehdiffusorspritze (8) einen länglichen Abgabekörper mit Biegungen (12) an seinen distalen Enden und eine zentrale Strecke (11) mit einem größeren Schnitt als die Biegungen (12) aufweist.

15. Mostfermentationstank (1) nach einem der vorhergehenden Ansprüche 7 - 14, **dadurch gekennzeichnet, dass** auf einen Deckel oder eine Abdeckung für den Fermentationstank (1) verzichtet wird; und
wobei der Einspritzkanal durch die tatsächliche obere Öffnung des Tanks (1) im Inneren des Fermentationstanks (1) angeordnet ist.

## Revendications

1. Procédé de fermentation de moût dans une cuve de fermentation (1) pour produire du vin, ce procédé de fermentation comprenant une phase de rupture et de remixage de la couche flottante de peaux (3) formée à la surface du moût pour fermenter, cette phase de rupture étant **caractérisée en ce qu'**elle comprend les étapes suivantes consistant à :
a) aspirer le gaz carbonique CO₂ généré pendant la fermentation du moût, cette aspiration étant faite dans la cuve de fermentation (1) au-dessus de la couche de peaux (3) à l'aide d'au moins un filtre aspirant (4) qui collecte et filtre le gaz carbonique CO₂, le filtre aspirant (4) étant situé stratégiquement dans la cuve de fermentation (1) dans une position intermédiaire entre la couche de peaux (3) qui se développe à la surface du moût et l'ouverture haute de la cuve de fermentation (1),
b) mélanger le gaz carbonique CO₂ aspiré à de l'air extérieur pour favoriser l'oxygénation du vin, et
c) introduire le mélange de gaz carbonique CO₂ et d'air extérieur dans la cuve de fermentation (1), ce mélange étant introduit dans le moût en dessous de la couche de peaux (3) générant des bulles (10) de gaz carbonique CO₂ et d'air qui, dans leur mouvement remontant vers la surface, cassent et agitent la couche de peaux (3),
le procédé étant effectué dans une unique cuve de fermentation (1) autosuffisante pour le gaz carbonique CO₂ sans nécessiter de réservoir supplémentaire pour stocker le gaz.

2. Procédé de fermentation de moût selon la revendication 1,
**caractérisé en ce que**
l'air extérieur mélangé selon l'étape b) est préalablement réglé à travers au moins une vanne d'aération (5).

3. Procédé de fermentation de moût selon la revendication 2,
**caractérisé en ce que**
la régulation de l'air extérieur se fait automatiquement avec un capteur dans la cuve de fermentation (1) et détectant la quantité d'oxygène contenue dans le moût, en étant relié à la vanne d'aération (5).

4. Procédé de fermentation de moût selon la revendication 1,
**caractérisé en ce que**
l'étape b) se fait dans un compresseur (6) qui mélange et comprime le gaz carbonique CO₂ et l'air extérieur.

5. Procédé de fermentation de moût selon la revendication 1,
**caractérisé en ce que**
l'étape c) se fait à l'aide d'au moins une conduite d'injection (7) qui est introduite dans la cuve de fermentation (1), le mélange de gaz carbonique CO₂ et d'air étant expulsé à travers au moins une buse de diffusion (8) reliée à la conduite d'injection (7).

6. Procédé de fermentation de moût selon la revendication 5,
**caractérisé en ce que**
la conduite d'injection (7) est introduite dans la cuve de fermentation (1) à travers l'ouverture haute de la cuve (1).

7. Cuve de fermentation de moût (1) pour produire du vin selon le procédé de fermentation selon l'une quelconque des revendications 1 à 6, et comportant un réservoir (2) destiné à recevoir le moût, la cuve de fermentation (1), étant **caractérisée en ce qu'**elle comprend :
- au moins un filtre aspirant (4) pour aspirer le gaz carbonique CO₂, ce filtre aspirant (4) étant situé à la meilleure place possible dans la cuve de fermentation (1), dans une position intermédiaire entre la couche de peaux (3) créant à la surface du moût et l'ouverture dans le haut de la cuve de fermentation (1),
- au moins une vanne d'aération (5) permettant de réguler la quantité d'air à introduire dans la cuve de fermentation (1),
- un compresseur (6) pour mélanger le gaz carbonique CO₂ aspiré à travers le filtre aspirant (4) et l'air extérieur venant de la vanne d'aération (5),
- au moins une conduite d'injection (7) reliée au compresseur (6) et permettant d'introduire le mélange de gaz carbonique CO₂ et d'air à l'intérieur de la cuve de fermentation (1), et
- au moins une buse de diffusion (8) reliée à la conduite d'injection (7) et munie de jets de sortie (9) pour expulser le mélange de gaz carbonique CO₂ et d'air dans la cuve de fermentation (1).

8. Cuve de fermentation de moût (1) selon la revendication 7,
**caractérisée en ce que**
le compresseur (6) comprend :
- au moins deux pompes centrifuges (20A, 20B), ayant chacune une chambre intérieure étanche (21) avec une entrée correspondante (E1, E2) et une sortie (S1, S2) pour faire circuler le mélange de gaz carbonique CO₂ et d'air extérieur venant respectivement du filtre aspirant (4) et de la vanne d'aération (5), et
- un collecteur (30) reliant la sortie (S1) de la première pompe centrifuge (20A) à l'entrée (E2) de la seconde pompe centrifuge (20B) pour un flux en série et compression séquentielle du mélange par les pompes centrifuges (20A, 20B).

9. Cuve de fermentation de moût (1) selon la revendication 8,
**caractérisée en ce que**
la cuve de fermentation de moût (1) comprend en outre un contrôleur logique programmable (50) pour commander et programmer les différentes phases du procédé de fermentation.

10. Cuve de fermentation de moût (1) selon la revendication 8,
**caractérisée en ce que**
les pompes centrifuges (20A, 20B) comportent un moteur électrique interne (25) avec un axe de rotation (26) et les chambres intérieures (21) comportent au moins un rotor intérieur (22) solidaire de l'arbre (26) du moteur électrique (25) pour comprimer le mélange de gaz carbonique CO₂ et l'air extérieur.

11. Cuve de fermentation de moût (1) selon la revendication 10,
**caractérisée en ce que**
les arbres (26) des moteurs électriques (25) et des rotors (22) sont en acier inoxydable et imprégnés avec de la résine époxy.

12. Cuve de fermentation de moût (1) selon la revendication 10,
**caractérisée en ce que**
les moteurs électriques (25) des pompes centrifuges (20A, 20B) ont des protections thermiques (27) qui coupent les moteurs en cas de surchauffe.

13. Cuve de fermentation de moût (1) selon la revendication 7,
**caractérisée en ce que**
la buse de diffusion (8) est une buse rotative.

14. Cuve de fermentation de moût (1) selon la revendication 13,
**caractérisée en ce que**
la buse rotative de diffusion (8) se compose d'un corps de sortie, allongé ayant des coudes (12) aux extrémités distales et une branche centrale (11) de section plus grande que les coudes (12).

15. Cuve de fermentation de moût (1) selon l'une quelconque des revendications 7 à 14,
**caractérisée en ce qu'**
elle comporte un couvercle et la conduite d'injection logée dans la cuve de fermentation (1) traverse le dessus de l'ouverture de la cuve (1).
